Europäisches Patentamt

European Patent Office

Office européen des brevets

(19)

(11) Numéro de publication: **0 287 463 B1**

## (12) FASCICULE DE BREVET EUROPEEN

(45) Date de publication de fascicule du brevet: **26.05.93** (51) Int. Cl.⁵: **B62D 7/14**

(21) Numéro de dépôt: **88400891.3**

(22) Date de dépôt: **13.04.88**

(54) **Dispositif directeur à effet variable agissant sur l'essieu arrière d'un véhicule.**

(30) Priorité: **17.04.87 FR 8705552**

(43) Date de publication de la demande:
**19.10.88 Bulletin 88/42**

(45) Mention de la délivrance du brevet:
**26.05.93 Bulletin 93/21**

(84) Etats contractants désignés:
**DE GB IT**

(56) Documents cités:
**EP-A- 0 150 857**
**EP-A- 0 178 118**
**DE-A- 3 410 115**
**FR-A- 930 380**

(73) Titulaire: **AUTOMOBILES PEUGEOT**
**75, avenue de la Grande Armée**
**F- 75116 Paris(FR)**

Titulaire: **AUTOMOBILES CITROEN**
**62 Boulevard Victor- Hugo**
**F- 92200 Neuilly- sur- Seine(FR)**

(72) Inventeur: **Lachaize, Henri Gabriel**
**13, Avenue Paul Langevin**
**F- 92230 Fontenay Aux Roses(FR)**

(74) Mandataire: **Berger, Helmut et al**
**Cabinet Z. WEINSTEIN 20, avenue de Fried-**
**land**
**F- 75008 Paris (FR)**

## Description

La présente invention concerne un dispositif directeur à effet variable agissant sur l'essieu arrière d'un véhicule qui comporte, outre la commande habituelle de la direction des roues avant par le volant, un essieu arrière dont les roues sont montées sur des porte-roue montés pivotants autour d'un axe atteignant le sol en arrière du centre de la zone de contact du pneu sur le sol, une liaison transversale des supports de roue arrière corrélant le brauquage des roues droite et gauche, et des moyens reliés au mécanisme de braquage des roues avant et agissant sur un mécanisme de braquage des roues arrière pour obtenir un braquage de sens opposé au braquage des roues avant.

On sait que le braquage des roues arrière d'un angle opposé à celui des roues avant réduit le rayon de virage et facilite donc les évolutions du véhicule du moins tant que ni les forces transversales ni la vitesse du véhicule ne sont trop élevées. En effet, on sait aussi, que, à grande vitesse alors que de faibles braquages des roues avant peuvent provoquer de fortes accélérations latérales, un braquage des roues arrière, même très faible et dans le sens opposé au braquage avant a pour conséquence un véhicule désagréable à conduire parce qu'instable.

Le dispositif connu par DE-A-3 410 115 tente de remédier à ces inconvénients en soumettant les roues arrière à un moment agissant dans le sens du contre-braquage. Mais ce dispositif ne permet pas d'annuler l'angle de braquage des roues arrière à partir d'une certaine vitesse.

La présente invention a pour objectif de proposer un dispositif directeur du type indiqué plus haut, qui ne présente pas les inconvénients qui viennent d'être énoncés. L'invention a donc pour but de proposer un dispositif qui permet d'obtenir un véhicule évolutif aux basses vitesses et très stable aux grandes vitesses.

Pour atteindre ce but, le dispositif directeur selon l'invention est caractérisé en ce que l'un au moins des moyens de liaison disposés entre le mécanisme de braquage avant et les porte-roues arrière d'axe de pivotement, présente une élasticité telle que l'angle de braquage des roues arrière, opposé à l'angle de braquage des roues avant à faibles vitesses, s'annule à partir d'une vitesse donnée sous l'effet de forces transversales agissant au sol sur le pneu.

Selon une caractéristique avantageuse de l'invention, le carter du mécanisme de braquage arrière est relié à la caisse du véhicule par des moyens élastique présentant une élasticité plus grande dans la direction des forces transversales que dans celles perpendiculaires à ces forces.

Selon une autre caractéristique avantageuse de l'invention, les moyens produisant l'élasticité précitée sont formées par un arbre de transmission à élasticité de torsion, dont une extrémité est assujettie à une rotation en fonction du braquage des roues avant, tandis que l'autre extrémité commande le mécanisme de braquage arrière.

Selon encore une autre caractéristique avantageuse de l'invention, les moyens produisant l'élasticité précitée sont formés par des biellettes de direction ou de leurs connexions.

L'invention sera mieux comprise, et d'autres but, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention, et dans lesquels :

La figure 1 est une vue schématique d'un dispositif directeur selon la présente invention

La figure 2 est une vue schématique latérale du dispositif selon la figure 1, et

La figure 3 est une vue en coupe axiale d'un dispositif de braquage arrière équipé de moyens conformes à la présente invention.

Le dispositif directeur selon la présente invention est fondé sur les considérations suivantes : pour obtenir que le véhicule soit évolutif aux basses vitesses et très stable aux grandes vitesses, le braquage des roues de l'essieu arrière sera la somme de deux termes antagonistes, un terme quasi-proportionnel au braquage avant mais de signe opposé et un terme quasi-proportionnel à l'accélération transversale At.

Si $\theta$ est l'angle moyen des roues d'un même essieu, on obtient la relation suivante entre les angles moyens $\theta_{AR}$ des roues de l'essieu arrière et $\theta_{AV}$ roues de l'essieu avant

$$\theta_{AR} = \propto A_t - \frac{\theta_{AV}}{n}$$

où n est le rapport des démultiplications des directions des deux essieux par rapport au volant et où $\alpha$ est un coefficient fonction de la géométrie, de l'élasticité des liaisons et des caractéristiques des pneumatiques. L'accélération transversale $A_t$ peut être exprimée de la manière suivante :

$$A_t = \frac{v^2}{R}$$

où V est la vitesse du véhicule et R le rayon de giration.

R peut être pris approximativement égal à

$$\frac{E}{\theta_{AV}}$$

où E est l'empattement. Ceci est d'autant plus vrai que O est petit et n est grand et que l'influence de l'essieu arrière sur le rayon de giration est faible. Ainsi on obtient :

$$\theta_{AR} = \alpha \frac{V^2}{E} \theta_{AV} - \frac{\theta_{AV}}{n}$$

$$\theta_{AR} = \left( \alpha \frac{V^2}{E} - \frac{1}{n} \right) \theta_{AV}$$

On constate que l'essieu arrière est neutre, c'est-à-dire $\theta_{AR}$ = zéro pour

$$V = V_o = \sqrt{\frac{E}{n\alpha}}$$

Pour $V < V_o$, $\theta_{AR}$ est de signe opposé à $\theta_{AV}$. Dans ce cas l'essieu arrière aide à virer.

Pour $V > V_o$, $\theta_{AR}$ est du même signe que $\theta_{AV}$. Dans ce cas l'essieu arrière contribue à la stabilité du véhicule.

Il est à noter que par simplification les relations ont été choisies linéaires.

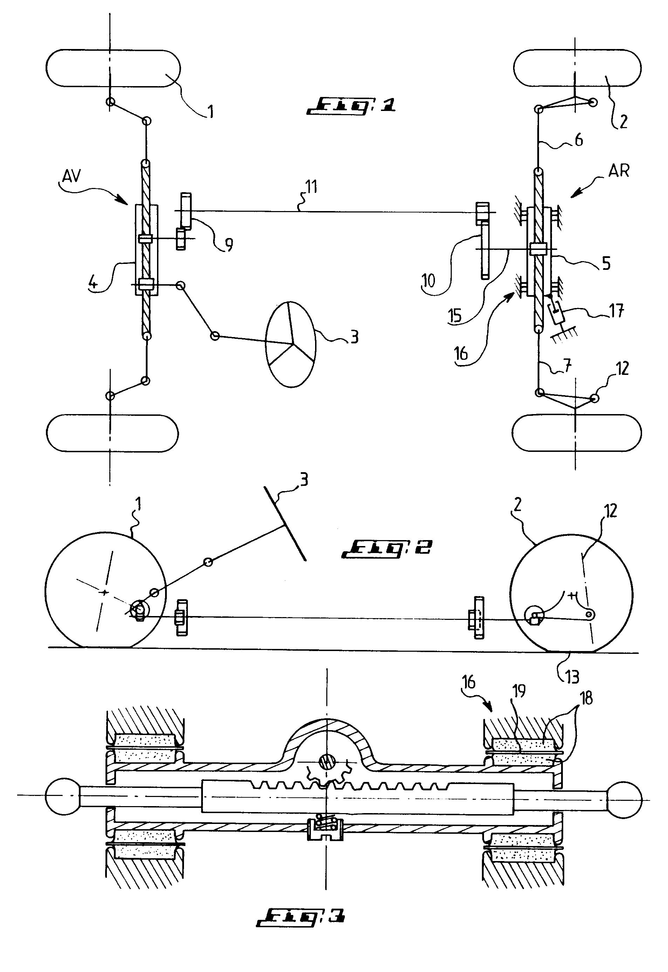

Les figures 1 à 3 montrent un mode de réalisation d'un dispositif directeur selon l'invention qui est adapté pour présenter un comportement conforme aux considérations précédentes. Aux figures, qui ne sont que des représentations schématiques, l'essieu avant et arrière porte respectivement les symboles AV et AR. Les roues avant et arrière sont indiquées respectivement en 1 et 2. 3 indique le volant et 4 la crémaillère de l'essieu avant, tandis que la crémaillère de l'essieu arrière est représentée schématiquement en 5, les biellettes de direction portant les références 6 et 7.

Selon la présente invention on installe à l'arrière du véhicule un essieu arrière directeur du genre de ceux qui sont installés habituellement à l'avant. Les particularités de cette mesure apparaîtront plus loin.

Pour réaliser

$$\theta_{AR} = -\frac{\theta_{AV}}{n}$$

on relie selon la présente invention les deux mécanismes de direction par exemple mécaniquement comme le montre la figure 1 : une prise de mouvement 9 qui est liée à la crémaillère avant 4 est associée à la commande de direction arrière 10 par un organe de transmission 11 qui pourrait être un arbre de torsion, ou un système connu de tringles ou de câbles

Pour réaliser

$$\theta_{AR} = \alpha A_t - \frac{\theta_{AV}}{n}$$

on ajoute selon l'invention un effet antagoniste des forces transversales. A cette fin l'axe de pivotement 12 des portes-roues arrière touche le sol nettement en arrière du centre de la zone de contact 13 sur le sol de par exemple environ au moins 3 cm. Le moment de braquage qui en résulte sous l'effet des forces latérales met en contrainte l'ensemble du mécanisme de direction arrière. S'il existe une forte élasticité dans le mécanisme, on peut matérialiser la relation

$$\theta = \alpha A_t$$

Cette forte élasticité peut être réalisée par une élasticité appropriée de torsion des arbres de transmission 11 et 15, l'arbre 15 étant interposé entre la direction arrière 3 et la crémaillère arrière 5.

On pourrait également réaliser cette forte élasticité par l'élasticité longitudinale appropriée des biellettes de direction 6 et 7 ou plus facilement par leurs connexions, mais cela donnera une moins bonne coordination des deux roues du même essieu arrière.

Cette élasticité peut encore être produite par des supports 16 du carter du boîtier de direction, par exemple par des cales en élastomère qui relient un carter de crémaillère 5 au châssis. Ce dernier dispositif est particulièrement intéressant car l'amortissement interne des cales en élastomère retardera l'effet stabilisateur en $\alpha$. $A_t$ et permettra d'obtenir un véhicule de conduite plus vive en conservant une bonne sécurité ou stabilité finale. Ce retard peut même être augmenté par l'utilisation d'un véritable amortisseur 17 entre le carter de crémaillère 5 et le châssis.

La figure 3 montre un mode de réalisation des cales 16. Les cales sont constituées par des anneaux cylindriques 18 coaxiaux à la crémaillère, qui sont séparés par des manchons minces rigides 19 disposés coaxialement entre les deux anneaux cylindriques 18. Cette structure permet d'associer une grande élasticité transversale à une bonne rigidité dans les directions perpendiculaires pour un bon contrôle du guidage des roues.

Il est évident que dans les modes de réalisation du dispositif directeur selon la présente invention, il convient de veiller tout particulièrement à ce que les variations de braquage en débattement des roues et les élasticités des articulations d'essieux concourent aux effets du présent dispositif et n'ont pas l'effet de les compromettre.

En résumé, on constate que le dispositif selon l'invention comprend deux essieux directeurs qui sont reliés par une relation constante de braquage, la plus simple étant une relation de proportionnalité. Il y a une forte chasse négative dans l'essieu arrière et une certaine élasticité dans les organes de braquage des roues de l'essieu arrière.

Il est encore à noter que dans la formule

$$\theta_{AR} = \alpha \, A_t - \frac{\theta_{AV}}{n}$$

n peut devenir infini. On obtient dans ce cas $\theta_{AR} = \alpha A_t$. Ceci signifie que la liaison entre les essieux disparaît, que la crémaillère arrière est fixe par rapport à son boîtier et disparait en tant que telle, que les biellettes de direction sont connectées directement sur le boîtier monté élastiquement. On conserve l'effet stabilisateur, mais on perd l'aide à virer aux basses vitesses.

**Revendications**

1. Dispositif directeur à effet variable agissant sur l'essieu arrière d'un véhicule qui comporte, outre la commande habituelle de la direction des roues avant par le volant, un essieu arrière dont les roues sont montées sur des porte-roues montés pivotants autour d'un axe (12) atteignant le sol en arrière du centre de la zone de contact du pneu sur le sol, une liaison transversale (6, 7) des supports de roues arrière corrélant le braquage des roues droites et gauches, et des moyens (9, 11, 10, 15) reliés au mécanisme de braquage des roues avant et agissant sur un mécanisme (5) de braquage des roues arrière, pour obtenir un braquage de sens opposé au braquage des roues avant, caractérisé en ce que l'un au moins des moyens de liaison (11, 15; 5; 6, 7) disposés entre le mécanisme de braquage avant (4) et les porte-roues arrière d'axe de pivotement (12), présente une élasticité telle que l'angle de braquage des roues arrière (2), opposé à l'angle de braquage des roues avant à faibles vitesses, s'annule à partir d'une vitesse donnée sous l'effet de forces transversales agissant au sol sur le pneu.

2. Dispositif directeur selon la revendication 1, caractérisé en ce que le carter (5) du mécanisme de braquage arrière est relié à la caisse du véhicule par des moyens élastiques (16) présentant une élasticité plus grande dans la direction des forces transversales que dans celles perpendiculaires à ces forces.

3. Dispositif directeur selon la revendication 2, caractérisé en ce que les moyens élastiques (16) sont formés par des cales en élastomère reliant le carter de crémaillère (5) au châssis du véhicule.

4. Dispositif directeur selon la revendication 3, caractérisé en ce que les cales (16) sont formées essentiellement par des anneaux cylindriques (18) coaxiaux à la crémaillère de l'essieu arrière (AR), qui sont séparés par des éléments en forme de manchons minces, rigides (19) disposés coaxialement entre des deux anneaux (18).

5. Dispositif directeur selon la revendication 1, caractérisé en ce que les moyens produisant l'élasticité précitée sont formés par un arbre de transmission (11, 15) à élasticité de torsion, dont une extrémité est assujettie à une rotation en fonction du braquage des roues avant (1), tandis que l'autre extrémité commande le mécanisme (5) de braquage arrière.

6. Dispositif directeur selon la revendication 1, caractérisé en ce que les moyens produisant l'élasticité précitée sont formés par des biellettes de direction (6, 7) ou de leur connexion.

7. Dispositif selon l'une des revendications 2 à 4, caractérisé en ce qu'il comprend un dispositif d'amortissement transversal (17) monté entre le mécanisme de braquage arrière (5) et le châssis.

## Claims

1. Steering device with a variable effect acting upon the rear axle of a vehicle which comprises in addition to the usual control of the steering of the front wheels by the steering wheel, a rear axle the wheels of which are mounted on wheel supports mounted for pivoting about an axis (12) reaching the ground backwards of the center of the zone of contact of the tyre on the ground, a transverse connection (6, 7) of the rear wheel supports correlating the deflections of the right and left wheels and means (9, 11, 10, 15) connected to the front wheel deflecting mechanism and acting upon a rear wheel deflecting mechanism (5) for obtaining a lock in the direction opposite to the lock of the front wheels, characterized in that at least one of the connecting means (11, 15 ; 5 ; 6, 7) disposed between the front deflecting mechanism (4) and the rear wheel support with the pivot axis (12) exhibits such an elasticity that the angle of lock of the rear wheels (2) opposite to the angle of lock of the front wheels at low speeds becomes zero from a given speed under the effect of transverse forces acting on the ground upon the tyre.

2. Steering device according to claim 1, characterized in that the casing (5) of the rear deflecting mechanism is connected to the body of the vehicle by elastic means (16) exhibiting a greater elasticity in the direction of the transverse forces than in those perpendicular to these forces.

3. Steering device according to claim 2, characterized in that the elastic means (16) are formed of blocks of elastomer connecting the toothed rack case (5) to the chassis of the vehicle.

4. Steering device according to claim 3, characterized in that the blocks (16) are formed essentially of cylindrical rings (18) coaxial with the toothed rack of the rear axle (AR), which are separated by rigid elements shaped as thin sleeves and disposed coaxially between the two rings (18).

5. Steering device according to claim 1, characterized in that the means providing the aforesaid elasticity are formed of a transmission shaft (11, 15) with a torsion elasticity, one end of which is subjected to a rotation in accordance with the deflection of the front wheels (1) whereas the other end controls the rear deflecting mechanism (5).

6. Steering device according to claim 1, characterized in that the means providing the aforesaid elasticity are formed of steering drag links (6, 7) or of their connection.

7. Device according to one of claims 2 to 4, characterized in that it comprises a transverse damping device (17) mounted between the rear deflecting mechanism (5) and the chassis.

## Patentansprüche

1. Auf die Hinterachse eines Fahrzeugs wirkende Lenkvorrichtung mit veränderlicher Wirkung, welche , ausser der üblichen Steuerung der Lenkung der Vorderräder durch das Lenkrad, eine Hinterachse, deren Räder an Radträgern angeordnet sind, die schwenkbar um eine den Boden hinter dem Mittelpunkt des Berührungsbereiches des Reifens auf dem Boden erreichende Achse (12) herum angeordnet sind, eine ein gegenseitiges Verhältnis zwischen den Ausschlägen der rechten und linken Räder schaffende Querverbindung (6,7) der hinteren Radträger und mit dem Mechanismus für den Lenkungsausschlag der Vorderräder verbundene und mit einem Mechanismus (5) zum Lenkungsausschlag der Hinterräder verbundene Mittel (9,11,10,15) zur Erzielung eines Lenkungsausschlags in der dem Lenkungsausschlag der Vorderräder entgegengesetzten Richtung, aufweist, dadurch gekennzeichnet, dass wenigstens eines der zwischen dem Vorderlenkungsausschlagsmechanismus (4) und die hinteren Radträger mit der Schwenkachse (12) angeordneten Verbindungsmittel (11,15;5;6,7) eine derartige Elastizität aufweist, dass der bei schwachen Geschwindigkeiten dem Ausschlagwinkel der Vorderräder entegegengesetzte Ausschlagwinkel der Hinterräder (2) ab einer gegebenen Geschwindigkeit unter der Wirkung der am Boden auf den Reifen wirkenden Querkräften gleich null wird.

2. Lenkvorrichtung nach Anspruch 1, dadurch gekennzeichnet, dass das Gehäuse (5) des hinteren Ausschlagsmechanismus mit dem Kasten des Fahrzeugs durch eine grössere Elastizität in der Richtung der Querkräfte als in denjenigen, die senkrecht zu diesen Kräften sind, aufweisende elastische Mittel (16) verbunden ist.

3. Lenkvorrichtung nach Anspruch 2, dadurch gekennzeichnet, dass die elastischen Mittel (16) durch das Zahnstangengehäuse (5) mit dem Fahrzeugrahmen verbindende Beilagen aus Elastomer gebildet werden.

4.  Lenkvorrichtung nach Anspruch 3, dadurch gekennzeichnet, dass die Beilagen (16) im wesentlichen durch koaxial mit der Zahnstange der Hinterachse (AR) angeordnete zylindrische Ringe (18) gebildet werden, die durch koaxial zwischen den beiden Ringen (18) angeordnete, steife, dünne muffenförmige Elemente getrennt sind.

5.  Lenkvorrichtung nach Anspruch 1, dadurch gekennzeichnet, dass die die vorgenannte Elastizität erzeugenden Mittel durch eine Uebertragungswelle (11,15) mit Drillungselastizität gebildet werden, deren eines Ende einer Ver−drehung in Abhängigkeit des Lenkungsaus−schlags der Vorderräder (1) unterworfen sind, während das andere Ende den hinteren Ausschlagsmechanismus (5) steuert.

6.  Lenkvorrichtung nach Anspruch 1, dadurch gekennzeichnet, dass die die Vorgenannte Elastizität erzeugenden Mittel durch Lenkspindelschubstangen (6,7) oder deren Verbindung gebildet werden.

7.  Vorrichtung nach einem der Ansprüche 2 bis 4, dadurch gekennzeichnet, dass sie eine zwischen dem hinteren Ausschlagsmechanismus (5) und dem Rahmen angeordnete Quer−dämpfungsvorrichtung (17) aufweist.

_Fig. 1_

_Fig. 2_

_Fig. 3_